# EUROPÄISCHE PATENTSCHRIFT

(11) **EP 1 230 627 B1**
(45) Veröffentlichungstag und Bekanntmachung des Hinweises auf die Patenterteilung: **28.05.2003**
(21) Anmeldenummer: 99974204.2
(22) Anmeldetag: 19.11.1999
(51) Int. Cl.: G07F 7/10

(54) **VERFAHREN UND SYSTEM ZUM BESTELLEN UND AUSLIEFERN VON DIGITALEN ZERTIFIKATEN**
METHOD AND SYSTEM FOR ORDERING AND DELIVERING DIGITAL CERTIFICATES
PROCEDE ET SYSTEME DE DEMANDE ET DE MISE A DISPOSITION DE CERTIFICATS NUMERIQUES

(43) Veröffentlichungstag der Anmeldung: 14.08.2002
(73) Patentinhaber: Swisscom Mobile AG, 3050 Bern (CH)
(72) Erfinder: CANTINI, Renato, CH-1782 Belfaux (CH); KELLER, Peter, CH-1752 Villars-sur-Glâne (CH)
(74) Vertreter: BOVARD AG - Patentanwälte
(86) Internationale Anmeldenummer: CH9900554
(87) Internationale Veröffentlichungsnummer: WO01039143

(56) Entgegenhaltungen:
- WO-A-98/26386
- US-A- 5 475 758
- US-A- 5 615 268
- US-A- 5 982 898

## Beschreibung

Die vorliegende Erfindung betrifft ein Verfahren und ein System zum Bestellen und Ausliefern von digitalen Zertifikaten. Die vorliegende Erfindung betrifft insbesondere ein Verfahren und ein System zum Bestellen von digitalen Zertifikaten durch Benutzer und zum Ausliefern von digitalen Zertifikaten an Zertifikatsträgervorrichtungen dieser Benutzer.

Mit der fortschreitenden Verbreitung und Popularität von digitalen Kommunikationsnetzen, seien dies Festnetze, insbesondere das weltweite Internet, oder terrestrische oder satellitenbasierte Mobilfunknetze, ist es für Benutzer immer notwendiger geworden, bei der Übertragung von digitalen Daten über diese Kommmunikationsnetze, insbesondere im Zusammenhang mit elektronischen Transaktionen jeglicher Art, kryptographische Verfahren zu verwenden, um insbesondere die Vertraulichkeit und Integrität der übertragenen Daten zu sichern und die Authentizität der Absender dieser Daten zu gewährleisten. Ein bekanntes kryptographisches Verfahren ist die asymmetrische Kryptographie, in der von einem Benutzer ein digitales Schlüsselpaar, bestehend aus einem privaten und einem öffentlichen Schlüssel, für die Verschlüsselung und Entschlüsselung von Daten sowie zur Generierung und Überprüfung von digitalen Signaturen verwendet wird. Um Daten unter einer zertifizierten Identität über die Kommunikationsnetze zu übertragen, wird der digitale öffentliche Schlüssel durch eine Zertifizierstelle (Certification Authority) mittels bekannter kryptographischer Algorithmen zertifiziert, nachdem die Identität des betreffenden Benutzers durch eine Registrierstelle (Registration Authority) bestimmt und authentifiziert worden ist. Für kritische Anwendungen, beispielsweise Finanztransaktionen und/oder Übertragungen von Daten, die Ereignisse von grosser Wichtigkeit auslösen, kann es notwendig sein, dass ein Benutzer zumindest für eine erstmalige Registrierung persönlich bei der Registrierstelle erscheint, wobei oft auch handschriftliche Unterschriften des Benutzers aufgezeichnet werden. Das resultierende Zertifikat des digitalen öffentlichen Schlüssels (digital public key certificate), oder in der folgenden Beschreibung kurz als Zertifikat bezeichnet, und das zugehörige Schlüsselpaar werden in einer Zertifikatsträgervorrichtung gespeichert, oft als Token bezeichnet, beispielsweise ein Mobilgerät, zum Beispiel ein Mobilfunktelefon, ein Personal Computer, ein tragbarer Computer, oder eine Chipkarte, zum Beispiel eine SIM-Karte (Subscriber Identity Module), oder eine andere geeignete Vorrichtung mit Datenspeicher und Kommunikationsschnittstelle.

Zum besseren Verständnis soll hier festgehalten werden, dass die Funktionen und Dienste einer Zertifizierstelle, respektive einer Registrierstelle, durch Einheiten ausgeführt werden, die im nachfolgenden Text als Zertifiziereinheit, respektive Registriereinheit, bezeichnet werden.

In der Patentschrift US 5982898 wird ein Zertifizierungsverfahren für die gesicherte und authentifizierte Kommunikation über das Internet beschrieben. Gemäss US 5982898 wird die Identität eines Benutzer durch eine Registriereinheit anhand von Informationen und Beweismitteln des Benutzers überprüft und bei gesicherter Identität dem Benutzer darauffolgend ein Passwort gegeben, welches von der Registriereinheit auch an eine Zertifiziereinheit übermittelt wird. Immer, wenn der Benutzer ein Zertifikat braucht, kontaktiert er gemäss US 5982898 die Zertifiziereinheit und identifiziert sich mit dem genannten Passwort. Wenn die Zertifiziereinheit gemäss US 5982898 das Passwort als gültig erkennt, generiert sie ein Zertifikat und übermittelt es über einen sicheren Kanal an den Benutzer.

Es ist eine Aufgabe dieser Erfindung, ein neues Verfahren und ein neues System zum Bestellen und Ausliefern von digitalen Zertifikaten vorzuschlagen, welche insbesondere in heterogenen Umgebungen mit unterschiedlicher technischer Infrastruktur, verschiedenen Kommunikationsnetzen und Zertifikatsträgervorrichtungen eingesetzt werden können.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass eine Bestellung eines digitalen Zertifikats, die durch einen Benutzer aufgegeben wird, beispielsweise eine Privatperson, eine Organisation, eine Einheit einer Organisation oder ein Angestellter einer Organisation, gespeichert wird, zum Beispiel indem in einer zuständigen Zertifiziereinheit, beispielsweise ein Computer mit entsprechenden programmierten Softwaremodulen, eine der Bestellung zugeordnete Zertifikatsbestellnummer gespeichert wird, und eine der Bestellung zugeordnete geheime Zertifikats-PIN (persönliche Identifizierungsnummer) generiert wird, beispielsweise mittels eines geeigneten Softwaremoduls, dass dem Benutzer die geheime Zertifikats-PIN, die sonst nur der Zertifiziereinheit bekannt ist, übermittelt wird, beispielsweise in verschlüsselter Form über ein Kommunikationsnetzwerk oder auf Papier, von aussen nicht sichtbar in einem Umschlag, und dass ein Zertifikat oder eine Referenz auf ein Zertifikat an die Zertifikatsträgervorrichtung des betreffenden Benutzers übertragen und dort gespeichert wird, wenn der Zertifiziereinheit die Zertifikats-PIN und Angaben, die es ermöglichen, die Bestellung zu bestimmen, übermittelt werden. Dabei ist die Zertifikatsträgervorrichtung beispielsweise ein Personal Computer, ein tragbarer Computer, ein Mobilfunkgerät, insbesondere ein Mobilfunktelefon, oder eine Chipkarte, insbesondere eine SIM-Karte (Subscriber Identity Module) oder eine andere geeignete Vorrichtung mit Datenspeicher und Kommunikationsschnittstelle. An Stelle einer Zertifikats-PIN kann auch ein Zertifikats-Passwort verwendet werden, wobei die Begriffe "Zertifikats-PIN" und "Zertifikats-Passwort" in diesem Text als gleichwertige Begriffe verwendet werden. Die Speicherung einer Bestellung, respektive einer Zertifikatsbestellnummer, und die Übermittlung einer dieser Bestellung respektive dieser Zertifikatsbestellnummer zugeordneten geheimen Zertifikats-PIN an den betreffenden Benutzer hat den Vorteil, dass die Übertragung des Zertifikats, respektive einer Referenz auf das Zertifikat, an die Zertifikatsträgervorrichtung des betreffenden Benutzers sowohl örtlich als auch zeitlich von der eigentlichen Bestellung durch den betreffenden Benutzer getrennt werden kann, ohne dass dabei die Sicherheit eingeschränkt wird, wodurch das Verfahren zum Bestellen und Ausliefern von Zertifikaten flexibel an unterschiedliche Anforderungen und Bedingungen der zur Verfügung stehenden technischen Infrastruktur angepasst werden kann. Insbesondere wenn die Zertifikatsträgervorrichtung keine benutzerfreundliche Benutzerschnittstelle umfasst, beispielsweise, wenn sie eine kleine Anzeige aufweist, auf der nur wenige Informationen wiedergegeben werden können oder wenn sie eine begrenzte Tastatur umfasst, die beispielsweise nur eine Untermenge der Tasten von herkömmlichen Computerkeyboards umfasst, oder wenn sie eine Benutzerschnittstelle umfasst, die eine für den Benutzer lange Antwortzeit für Befehlseingabe und Zeichendarstellung aufweist, kann für die Aufgabe einer Bestellung eines Zertifikats eine andere Vorrichtung mit einer geeigneten Benutzerschnittstelle, beispielsweise ein Personal Computer oder ein anderes geeignetes Datenterminal, verwendet werden, und die Zertifikatsträgervorrichtung bloss bei der Auslieferung des Zertifikats eingesetzt werden.

Vorzugsweise werden beim Bestellen eines Zertifikats Personaldaten des betreffenden Benutzers an die Zertifiziereinheit übermittelt, beispielsweise über ein Kommunikationsnetz und/oder über Softwareprogrammschnittstellen, die in einem Computer ausgeführt werden, oder auf Papier, wobei der Benutzer durch eine Registriereinheit authentifiziert wird und die Zuordnung der Personaldaten zu diesem betreffenden Benutzer von der Registriereinheit der Zertifiziereinheit bestätigt wird, beispielsweise über ein Kommunikationsnetz und/oder über Softwareprogrammschnittstellen, die in einem Computer ausgeführt werden, oder auf Papier. Durch die Trennung der Funktionen der Zertifiziereinheit und der Registriereinheit wird eine weitere zeitliche und/oder örtliche Trennung von Bestellungsaufgabe, insbesondere Personaldatenerfassung, und Benutzeridentifizierung ermöglicht, wenn dies erforderlich oder wünschenswert ist.

In einer Ausführungsvariante wird in der Zertifikatsträgervorrichtung ein kryptographisches Schlüsselpaar, bestehend aus einem privaten und einem öffentlichen Schlüssel, generiert, und der öffentliche Schlüssel an die Zertifiziereinheit übermittelt, beispielsweise über ein Kommunikationsnetz, zum Beispiel ein Mobilfunknetz und/oder ein Festnetz, und das Zertifikat durch Zertifizierung des empfangenen öffentlichen Schlüssels durch die Zertifiziereinheit generiert. Diese Ausführungsvariante hat den Vorteil, dass der private Schlüssel nicht über Kommunikationsnetze an die Zertifikatsträgervorrichtung übermittelt werden muss und daher die Vertraulichkeit des privaten Schlüssels besser gewährleistet werden kann.

In einer Ausführungsvariante wird durch eine Schlüsselgenerierungseinheit ausserhalb der Zertifikatsträgervorrichtung, beispielsweise ein geeignetes Hard- oder Softwaremodul auf dem Computer der Zertifiziereinheit oder auf einem anderen Computer, ein kryptographisches Schlüsselpaar, bestehend aus einem privaten und einem öffentlichen Schlüssel, generiert und der öffentliche Schlüssel der Zertifiziereinheit zugänglich gemacht, beispielsweise über ein Kommunikationsnetz und/oder über Softwareprogrammschnittstellen, das Zertifikat durch Zertifizierung des öffentlichen Schlüssels durch die Zertifiziereinheit generiert, und der private Schlüssel an die Zertifikatsträgervorrichtung übertragen, beispielsweise über . ein Kommunikationsnetz, zum Beispiel ein Mobilfunknetz und/oder ein Festnetz, oder über eine geeignete, lokale Geräteschnittstelle, zum Beispiel eine kontaktbehaftete Geräteschnittstelle oder eine kontaktlose Geräteschnittstelle, beispielsweise eine Funk- oder Infrarotschnittstelle. Der Vorteil dieser Ausführungsvariante besteht darin, dass die Zertifikatsträgervorrichtung keine Mittel, beispielsweise Hard- oder Softwaremodule, zur Generierung des Schlüsselpaars aufweisen muss. Allerdings muss die Zertifikatsträgervorrichtung für die Übertragung des privaten Schlüssels auf die Zertifikatsträgervorrichtung über eine geeignete Geräteschnittstelle lokal bei der Schlüsselgenerierungseinheit präsentiert werden, wenn der private Schlüssel aus Sicherheitsgründen nicht über ein Kommunikationsnetz auf die Zertifikatsträgervorrichtung übertragen werden soll, wobei eine allfällige Übertragung des privaten Schlüssels über ein Kommunikationsnetz gesichert, beispielsweise verschlüsselt, erfolgen würde.

Erfindungsgemäss wird eine Zertifikatsträgeridentifizierung an die Zertifiziereinheit übermittelt, beispielsweise eine IMSI (International Mobile Subscriber Identification), eine MSISDN-Nummer (Mobile Subscriber ISDN), eine eindeutige Gerätenummer oder eine andere eindeutige Identifizierung, und das Zertifikat oder die Referenz auf das Zertifikat wird an die durch die Zertifikatsträgeridentifizierung bestimmte Zertifikatsträgervorrichtung übertragen, beispielsweise über ein Kommunikationsnetz, zum Beispiel ein Mobilfunknetz und/oder ein Festnetz.

An dieser Stelle soll festgehalten werden, dass sich die vorliegende Erfindung neben dem erfindungsgemässen Verfahren auch auf ein System zur Ausführung dieses Verfahrens bezieht.

Nachfolgend wird eine Ausführung der vorliegenden Erfindung anhand von Beispielen beschrieben. Die Beispiele der Ausführung werden durch folgende beigelegten Figuren illustriert:
Figur 1a zeigt ein Zeitdiagramm, welches eine erste Variante des sequentiellen Ablaufs des Informationsflusses zwischen einem Benutzer, einer Zertifiziereinheit und einer Registriereinheit illustriert.
Figur 1b zeigt ein Zeitdiagramm, welches eine zweite Variante des sequentiellen Ablaufs des Informationsflusses zwischen einem Benutzer, einer Zertifiziereinheit und einer Registriereinheit illustriert.
Figur 1c zeigt ein Zeitdiagramm, welches eine dritte Variante des sequentiellen Ablaufs des Informationsflusses zwischen einem Benutzer, einer Zertifiziereinheit und einer Registriereinheit illustriert.
Figur 2a zeigt ein Blockdiagramm, welches schematisch erste Varianten der Anordnung der Zertifiziereinheit, der Registriereinheit und der Zertifikatsträgervorrichtung illustriert.
Figur 2b zeigt ein Blockdiagramm, welches schematisch zweite Varianten der Anordnung der Zertifiziereinheit, der Registriereinheit und der Zertifikatsträgervorrichtung illustriert.
Figur 2c zeigt ein Blockdiagramm, welches schematisch dritte Varianten der Anordnung der Zertifiziereinheit, der Registriereinheit und der Zertifikatsträgervorrichtung illustriert.

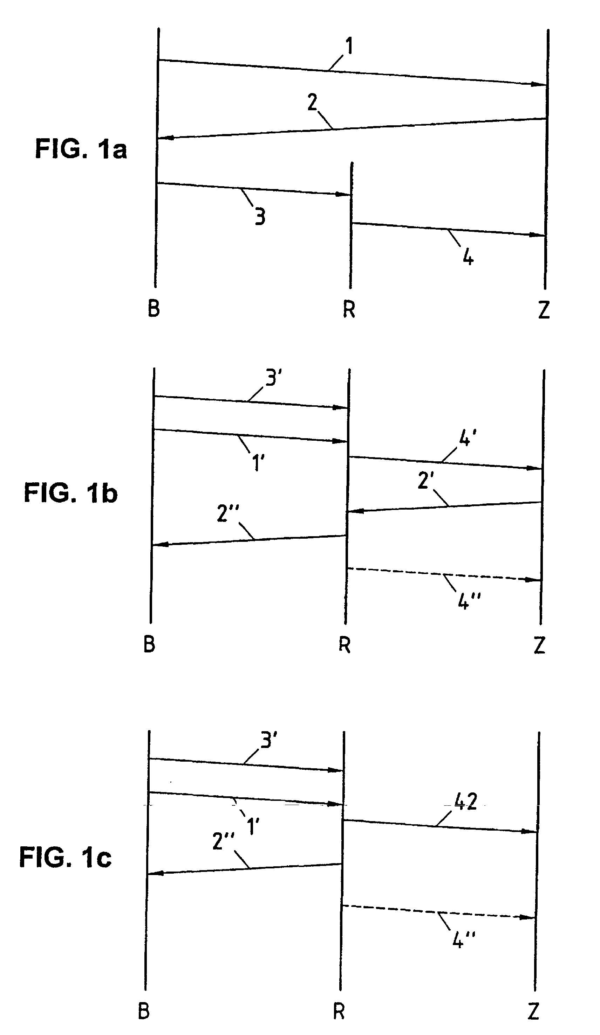

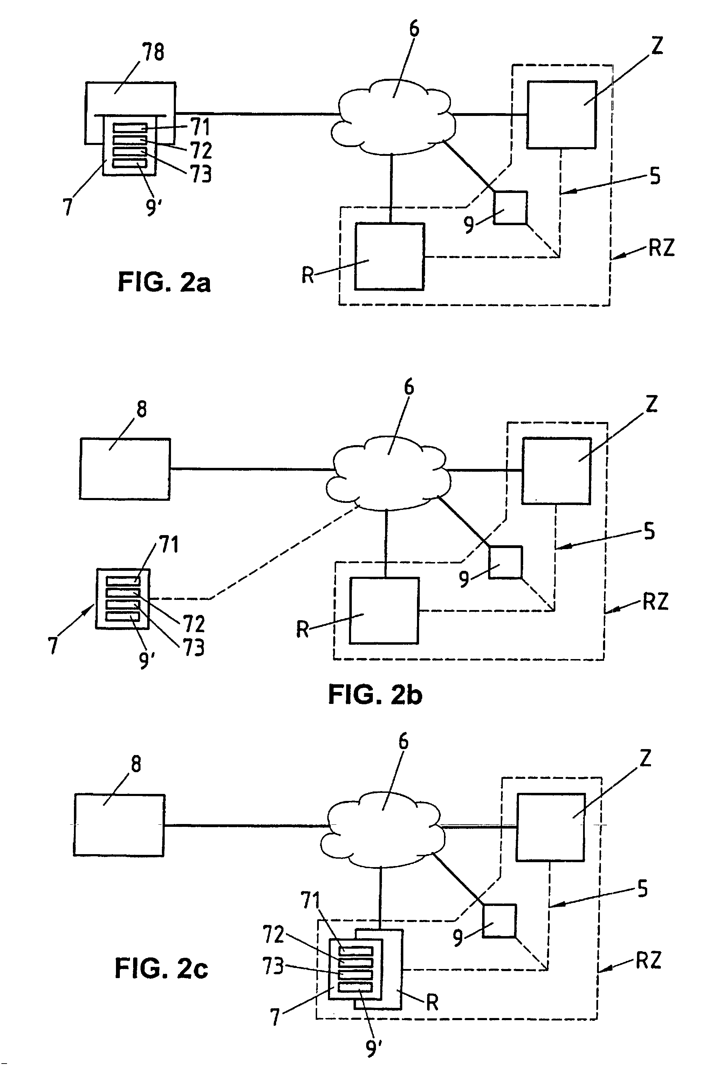

In der Figur 1a bezieht sich das Bezugszeichen B auf einen Benutzer, welcher zunächst, wie durch den Pfeil 1 symbolisch dargestellt wird, eine Bestellung für ein Zertifikat aufgibt und dabei seine Personaldaten an die Zertifiziereinheit Z übermittelt, wo sie beispielsweise in einer Datenbank gespeichert werden. Die Aufgabe der Bestellung für ein Zertifikat und die Übermittlung der Personaldaten des Benutzers B erfolgt vorzugsweise mittels einem geeigneten Kommunikationsendgerät 78, 8, oder insbesondere mit der Zertifikatsträgervorrichtung 7, über ein Kommunikationsnetz 6, wie anhand der Figuren 2a bis 2c später beschrieben wird. Wie in der Figur 1a durch den Pfeil 2 illustriert wird, wird danach von der Zertifiziereinheit Z eine dieser Bestellung zugeordnete geheime Zertifikats-PIN (Persönliche Identifizierungsnummer) an den Benutzer B übermittelt. Vorzugsweise erfolgt auch die Übermittlung der geheimen Zertifikats-PIN von der Zertifiziereinheit Z über ein Kommunikationsnetz 6 an ein geeignetes Kommunikationsendgerät 78, 8, oder insbesondere an die Zertifikatsträgervorrichtung 7 des Benutzers B, wie später anhand der Figuren 2a bis 2c beschrieben wird. Wie in der Figur 1a durch den Pfeil 3 symbolisch dargestellt wird, authentifiziert sich der Benutzer B zu einem späteren Zeitpunkt bei der Registriereinheit R, beispielsweise durch ein persönliches Erscheinen bei der Registriereinheit R unter Zuhilfenahme von offiziellen Dokumenten, zum Beispiel ein Ausweis oder ein anderes offiziell beglaubigtes Dokument, oder über ein Kommunikationsnetz 6 unter Verwendung einer geheimen Information, die nur dem Benutzer B und der Registriereinheit R bekannt ist und die beispielsweise von der Registriereinheit R nach einer vorgängig bereits erfolgten Authentifizierung an den Benutzer B übermittelt oder übergeben worden ist. Bei der Authentifizierung des Benutzers B können von der Registriereinheit R auch die Personaldaten des Benutzers B in der Zertifiziereinheit Z, beispielsweise über die Kommunikationsverbindung 5 oder über das Kommunikationsnetz 6, konsultiert werden. Darauffolgend bestätigt die Registriereinheit R der Zertifiziereinheit Z die Authentizität des betreffenden Benutzers B, das heisst, die Registriereinheit R bestätigt der Zertifiziereinheit Z die Echtheit der Identität des Benutzers B und die Zuordnung der Personaldaten zum betreffenden Benutzer B, wie in der Figur 1a durch den Pfeil 4 dargestellt wird. Die Bestätigung der Authentizität des Benutzers B durch die Registriereinheit R an die Zertifiziereinheit Z kann über die Kommunikationsverbindung 5 oder über das Kommunikationsnetz 6 erfolgen, wobei, je nachdem wie die Zertifiziereinheit Z und die Registriereinheit R ausgeführt sind, die Authentizität der Registriereinheit R von der Zertifiziereinheit Z überprüft wird, beispielsweise auf Grund einer elektronischen Unterschrift der Registriereinheit R, insbesondere einer digitalen Signatur der Registriereinheit R. Die Bestätigung der Authentizität des Benutzers B durch die Registriereinheit R an die Zertifiziereinheit Z kann aber auch mittels eines durch den Benutzer B und durch einen Vertreter der Registriereinheit R unterschriebenen Vertrags (auf Papier) bestätigt werden, welcher Vertrag beispielsweise auf dem Postweg oder mittels Fax an Vertreter der Zertifiziereinheit Z übermittelt wird.

In der Figur 1b wird eine weitere (alternative oder ergänzende) Ausführungsvariante des sequentiellen Ablaufs des Informationsflusses zwischen dem Benutzer B, der Zertifiziereinheit Z und der Registriereinheit R dargestellt. Gemäss Figur 1b authentifiziert sich der Benutzer B zunächst, wie durch den Pfeil 3' symbolisch dargestellt, bei der Registriereinheit R, beispielsweise, wie oben beschrieben, durch ein persönliches Erscheinen bei der Registriereinheit R unter Zuhilfenahme von offiziellen Dokumenten, zum Beispiel ein Ausweis oder ein anderes offiziell beglaubigtes Dokument, oder über ein Kommunikationsnetz 6 unter Verwendung einer geheimen Information, die nur dem Benutzer B und der Registriereinheit R bekannt ist und die beispielsweise von der Registriereinheit R nach einer vorgängig bereits erfolgten Authentifizierung an den Benutzer B übermittelt oder übergeben worden ist. Danach gibt der Benutzer B, wie durch den Pfeil 1' dargestellt wird, eine Bestellung für ein Zertifikat auf und gibt dabei seine Personaldaten an die Registriereinheit R. Wie in der Figur 1b durch den Pfeil 4' dargestellt wird, leitet die Registriereinheit R darauffolgend die Personaldaten des Benutzers B an die Zertifiziereinheit Z, beispielsweise über die Kommunikationsverbindung 5 oder über das Kommunikationsnetz 6, wo sie beispielsweise in einer Datenbank gespeichert werden. Bei der Übermittlung der Personaldaten an die Zertifiziereinheit Z kann auch gleich die Authentizität des Benutzers B, das heisst die Echtheit der Identität des Benutzers B und die Zuordnung der Personaldaten zum betreffenden Benutzer B, an die Zertifiziereinheit Z bestätigt werden, dabei wird je nachdem wie die Zertifiziereinheit Z und die Registriereinheit R ausgeführt sind, die Authentizität der Registriereinheit R von der Zertifiziereinheit Z überprüft, beispielsweise auf Grund einer elektronischen Unterschrift der Registriereinheit R, insbesondere einer digitalen Signatur der Registriereinheit R. Wie in der Figur 1b durch den Pfeil 2' illustriert wird, wird danach von der Zertifiziereinheit Z eine der aufgegebenen Bestellung zugeordnete geheime Zertifikats-PIN (Persönliche Identifizierungsnummer) an die Registriereinheit R übermittelt, beispielsweise über die Kommunikationsverbindung 5 oder über das Kommunikationsnetz 6. Wie in der Figur 1b durch den Pfeil 2" dargestellt wird, leitet die Registriereinheit R die Zertifikats-PIN an den Benutzer B weiter, beispielsweise nur für den Benutzer B sichtbar auf einer Anzeige oder durch Aufdrucken auf einen durch einen Umschlag verdeckten Beleg oder über eine geeignete Schreibvorrichtung auf einen Datenträger des Benutzers B, beispielsweise auf die Zertifikatsträgervorrichtung 7. Falls die Authentizität des Benutzers B nicht bereits über die Kommunikationsverbindung 5 oder über das Kommunikationsnetz 6 an die Zertifiziereinheit Z bestätigt wurde, kann die Bestätigung der Authentizität des Benutzers B durch die Registriereinheit R an die Zertifiziereinheit Z, wie in der Figur 1b durch den gestrichelten Pfeil 4" dargestellt, mittels eines durch den Benutzer B und durch einen Vertreter der Registriereinheit R unterschriebenen Vertrages (auf Papier) bestätigt werden, welcher Vertrag beispielsweise auf dem Postweg oder mittels Fax an Vertreter der Zertifiziereinheit Z übermittelt wird.

In der Figur 1c wird eine weitere (alternative oder ergänzende) Ausführungsvariante des sequentiellen Ablaufs des Informationsflusses zwischen dem Benutzer B, der Zertifiziereinheit Z und der Registriereinheit R dargestellt, die sich von der Variante gemäss Figur 1b dadurch unterscheidet, dass die Zertifikats-PIN in der Registriereinheit R generiert wird. Gemäss Figur 1c authentifiziert sich der Benutzer B zunächst, wie durch den Pfeil 3' symbolisch dargestellt, bei der Registriereinheit R, beispielsweise, wie oben beschrieben, durch ein persönliches Erscheinen bei der Registriereinheit R unter Zuhilfenahme von offiziellen Dokumenten, zum Beispiel ein Ausweis oder ein anderes offiziell beglaubigtes Dokument, oder über ein Kommunikationsnetz 6 unter Verwendung einer geheimen Information, die nur dem Benutzer B und der Registriereinheit R bekannt ist und die beispielsweise von der Registriereinheit R nach einer vorgängig bereits erfolgten Authentifizierung an den Benutzer B übermittelt oder übergeben worden ist. Danach gibt der Benutzer B, wie durch den Pfeil 1' dargestellt wird, eine Bestellung für ein Zertifikat auf und gibt dabei seine Personaldaten an die Registriereinheit R. Im Unterschied zu den vorhergehenden Ausführungsvarianten gemäss den Figuren 1a und 1b wird nach der Authentifizierung des Benutzers B eine der aufgegebenen Bestellung zugeordnete geheime Zertifikats-PIN (Persönliche Identifizierungsnummer) in der Registriereinheit R generiert. Wie in der Figur 1c durch den Pfeil 42 dargestellt wird, leitet die Registriereinheit R darauffolgend die Personaldaten des Benutzers B sowie die generierte geheime Zertifikats-PIN an die Zertifiziereinheit Z, beispielsweise über die Kommunikationsverbindung 5 oder über das Kommunikationsnetz 6, wo sie beispielsweise in einer Datenbank gespeichert werden. Bei der Übermittlung der Personaldaten an die Zertifiziereinheit Z kann auch gleich die Authentizität des Benutzers B, das heisst die Echtheit der Identität des Benutzers B und die Zuordnung der Personaldaten zum betreffenden Benutzer B, an die Zertifiziereinheit Z bestätigt werden, dabei wird, je nachdem wie die Zertifiziereinheit Z und die Registriereinheit R ausgeführt sind, die Authentizität der Registriereinheit R von der Zertifiziereinheit Z überprüft, beispielsweise auf Grund einer elektronischen Unterschrift der Registriereinheit R, insbesondere einer digitalen Signatur der Registriereinheit R. Wie in der Figur 1c durch den Pfeil 2" dargestellt wird, leitet die Registriereinheit R die geheime Zertifikats-PIN auch an den Benutzer B weiter, beispielsweise nur für den Benutzer B sichtbar auf einer Anzeige, oder durch Aufdrucken auf einen durch einen Umschlag verdeckten Beleg oder über eine geeignete Schreibvorrichtung auf einen Datenträger des Benutzers B, beispielsweise auf die Zertifikatsträgervorrichtung 7. Falls die Authentizität des Benutzers B nicht bereits über die Kommunikationsverbindung 5 oder über das Kommunikationsnetz 6 an die Zertifiziereinheit Z bestätigt wurde, kann die Bestätigung der Authentizität des Benutzers B durch die Registriereinheit R an die Zertifiziereinheit Z, wie in der Figur 1c durch den gestrichelten Pfeil 4" dargestellt, mittels eines durch den Benutzer B und durch einen Vertreter der Registriereinheit R unterschriebenen Vertrages (auf Papier) bestätigt werden, welcher Vertrag beispielsweise auf dem Postweg oder mittels Fax an Vertreter der Zertifiziereinheit Z übermittelt wird.

Die oben erwähnten Personaldaten eines Benutzers B umfassen beispielsweise Angaben wie Vorname, Nachname, Mädchenname der Mutter, Geburtsdatum, Adresse, Beruf sowie Identifizierungsnummern wie zum Beispiel Pass-, Versicherungs- oder Kundennummer(n) des Benutzers B.

Nachdem die Zertifiziereinheit Z von der Registriereinheit R eine Bestätigung der Authentizität des Benutzers B erhalten hat, gilt die Authentizität des Benutzers B für die Zertifiziereinheit Z als sichergestellt, so dass eine spätere Auslieferung des bestellten Zertifikats an den Benutzer B, beziehungsweise an eine Zertifikatsträgervorrichtung 7 des Benutzers B, vorgenommen werden kann, wenn sich der Benutzer B mit der geheimen Zertifikats-PIN authentifiziert. Für den Bezug des bestellten Zertifikats wird, wie später anhand der Figuren 2a bis 2c beschrieben wird, eine Zertifikatsträgeridentifizierung an die Zertifiziereinheit Z übermittelt, welche Zertifikatsträgeridentifizierung die Zertifikatsträgervorrichtung 7 identifiziert, auf die das bestellte Zertifikat oder eine Referenz auf dieses Zertifikat übertragen werden soll. Für den Bezug des bestellten Zertifikats müssen der Zertifiziereinheit Z genügend Angaben übermittelt werden, um der Zertifiziereinheit Z zu ermöglichen, die betreffende Zertifikatsbestellung, das heisst die betreffende Zertifikatsbestellnummer, zu bestimmen. Je nach Ausführung kann zum Beispiel die Zertifikats-PIN eine eindeutige Nummer oder ein eindeutiges Passwort sein, die erlauben, die zugeordnete Bestellung zu bestimmen oder es werden Personaldaten des betreffenden Benutzers B an die Zertifiziereinheit Z übermittelt, die es ermöglichen, die betreffende Bestellung zu bestimmen, oder die Bestellnummer wird vorgängig, bei der Bestellung, dem Benutzer B übermittelt, so dass diese Bestellnummer beim Bezug des bestellten Zertifikats an die Zertifiziereinheit Z übermittelt werden kann.

Anhand der Figuren 2a bis 2c werden in den folgenden Abschnitten verschiedene mögliche Anordnungen der Zertifiziereinheit Z, der Registriereinheit R und der Zertifikatsträgervorrichtung 7 beschrieben.

Die Registriereinheit R ist beispielsweise in einer öffentlich zugänglichen Stelle, in welcher Benutzer B, die sich registrieren lassen möchten, zum Beispiel durch Vertreter der Registriereinheit R, das heisst angestelltes Personal der Registriereinheit R, bei der Registrierung assistiert werden. Die Registriereinheit R umfasst sämtliche Hard- und Software-Komponenten, um die oben beschriebenen Funktionen der Registriereinheit R auszuführen, insbesondere um die anhand der Figuren 1a und/oder 1b und/oder 1c beschriebenen Funktionen der Registriereinheit R auszuführen. Die Registriereinheit R umfasst oder hat Zugang auf eine programmierte Softwareapplikation, die auf einem oder mehreren Computern ausgeführt ist, beispielsweise auf einem zentralen Rechner mit angeschlossenen Daten-Ein/Ausgabeterminals oder in einer vernetzten Client/Server-Umgebung mit mehreren Computern. Die programmierte Softwareapplikation umfasst beispielsweise Softwaremodule um in der Zertifiziereinheit Z gespeicherte Personaldaten eines Benutzers B zu konsultieren, um die Authentizität eines Benutzers B der Zertifiziereinheit Z zu bestätigen, um die Authentizität der Registriereinheit R, beispielsweise anhand einer elektronischen Signatur, an die Zertifiziereinheit Z zu bestätigen und/oder um eine Bestellung für ein Zertifikat sowie Personaldaten von einem Benutzer B entgegenzunehmen, zu erfassen und an die Zertifiziereinheit Z weiterzuleiten und/oder um von der Zertifiziereinheit Z eine Zertifikats-PIN entgegenzunehmen und an den Benutzer B weiterzuleiten, und/oder eine geheime Zertifikats-PIN zu generieren und gesichert an die Zertifiziereinheit Z und den Benutzer B weiterzuleiten. Insbesondere für die Weiterleitung der Zertifikats-PIN an den Benutzer B umfasst die Registriereinheit R beispielsweise geeignete zusätzliche Hardwarekomponenten, insbesondere dafür geeignete Ausgabevorrichtungen, wie beispielsweise Anzeigevorrichtungen, Schreibvorrichtungen oder Drucker. Die Registriereinheit R umfasst zudem entsprechende Hard- und Softwarekomponenten um über das Kommunikationsnetz 6 und/oder die Kommunikationsverbindung 5 zu kommunizieren.

Die Zertifiziereinheit Z umfasst sämtliche Hard- und Software-Komponenten, um die oben beschriebenen Funktionen der Zertifiziereinheit Z auszuführen, insbesondere um die anhand der Figuren 1a und/oder 1b und/oder 1c beschriebenen Funktionen der Zertifiziereinheit Z auszuführen. Die Zertifiziereinheit Z hat beispielsweise Zugang zu oder umfasst eine programmierte Softwareapplikation, die auf einem oder mehreren Computern ausgeführt ist. Die programmierte Softwareapplikation der Zertifiziereinheit Z umfasst beispielsweise Softwaremodule um Bestellungen für Zertifikate und Personaldaten von einem Benutzer B, und/oder für einen Benutzer B von der Registriereinheit R, entgegenzunehmen und zu erfassen, um für eine entgegengenommene Bestellung eine zugeordnete Zertifikatsbestellnummer zu generieren und abzuspeichern, um für eine entgegengenommene und erfasste Bestellung eine Zertifikats-PIN zu generieren und abzuspeichern und/oder um eine durch die Registriereinheit R generierte geheime Zertifikats-PIN, vorzugsweise gesichert, von der Registriereinheit R entgegenzunehmen und abzuspeichern und/oder um eine generierte Zertifikats-PIN gesichert dem betreffenden Benutzer und/oder vorzugsweise verschlüsselt der Registriereinheit R zu übermitteln, um der Registriereinheit R erfasste Personaldaten eines Benutzers B zugänglich zu machen, um von der Registriereinheit R eine Bestätigung der Authentizität eines Benutzers B entgegenzunehmen und abzuspeichern und um die Authentizität der Registriereinheit R, beispielsweise anhand einer elektronischen Signatur, zu überprüfen. Die Zertifiziereinheit Z umfasst zudem entsprechende Hard- und Softwarekomponenten, um über das Kommunikationsnetz 6 und/oder die Kommunikationsverbindung 5 zu kommunizieren.

Die Zertifiziereinheit Z verfügt zudem über Softwaremodule um vom Benutzer B, respektive von dem vom Benutzer B verwendeten Kommunikationsendgerät 78, 8 oder der Zertifikatsträgervorrichtung 7, eine Anforderung für die Auslieferung des bestellten Zertifikats entgegenzunehmen, wobei die geheime Zertifikats-PIN zur Authentifizierung des Benutzers B, eine Zertifikatsträgeridentifizierung 72, je nach Ausführungsvariante der öffentlichen Schlüssel eines in der Zertifikatsträgervorrichtung 7 generierten kryptographischen Schlüsselpaars des Benutzers B, sowie Angaben, die es ermöglichen die Bestellung, respektive die der Bestellung zugeordnete Zertifikatsbestellnummer zu bestimmen, entgegengenommen werden, um diese entgegengenommenen Daten zu überprüfen und um gegebenenfalls durch Zertifizierung des öffentlichen Schlüssels, gemäss herkömmlichen kryptographischen Algorithmen, das gewünschte Zertifikat zu generieren und dem Benutzer B, respektive der durch die Zertifikatsträgeridentifizierung 72 identifizierten Zertifikatsträgervorrichtung 7, das generierte Zertifikat, respektive eine Referenz auf das generierte Zertifikat, zum Beispiel eine Seriennummer, ein Verzeichnisangabe (Directory) oder eine URL-Adresse (Universal Resource Locator), zur Speicherung zu übermitteln. Das kryptographische Schlüsselpaar des Benutzers B wird beispielsweise durch ein geeignetes Hard- oder Softwaremodul, nämlich die Schlüsselgenerierungseinheit 9', auf der Zertifikatsträgervorrichtung 7 gemäss herkömmlichen kryptographischen Algorithmen generiert und der zugehörige öffentliche Schlüssel mit der Anforderung zur Auslieferung des Zertifikats an die Zertifiziereinheit Z übertragen. In einer anderen Variante wird das kryptographische Schlüsselpaar des Benutzers B durch ein geeignetes Softwaremodul einer Schlüsselgenerierungseinheit 9 ausserhalb der Zertifikatsträgervorrichtung 7 gemäss herkömmlichen kryptographischen Algorithmen generiert, welches Softwaremodul der Schlüsselgenerierungseinheit 9 den zugehörigen öffentlichen Schlüssel der Zertifiziereinheit Z zugänglich macht und beispielsweise den privaten Schlüssel gesichert an den Benutzer B, respektive an das vom Benutzer B verwendete Kommunikationsendgerät 78, 8 oder an die Zertifikatsträgervorrichtung 7 überträgt. Der private Schlüssel kann von der Schlüsselgenerierungseinheit 9 aber auch gesichert an die Zertifiziereinheit Z übertragen werden und von der Zertifiziereinheit Z, zusammen mit dem generierten Zertifikat, an den Benutzer B, respektive an das vom Benutzer B verwendete Kommunikationsendgerät 78, 8 oder an die Zertifikatsträgervorrichtung 7 übertragen werden.

Die Schlüsselgenerierungseinheit 9 umfasst beispielsweise einen Computer, auf welchem das oben beschriebene Softwaremodul zur Erzeugung und Übermittlung von kryptographischen Schlüsselpaaren ausgeführt wird, respektive mit welchem das oben beschriebene Hardwaremodul zur Erzeugung und Übermittlung von kryptographischen Schlüsselpaaren verbunden ist sowie entsprechende Hard- und Softwarekomponenten um über das Kommunikationsnetz 6 und/oder die Kommunikationsverbindung 5 zu kommunizieren.

An dieser Stelle soll festgehalten werden, dass das in den Figuren 2a bis 2c schematisch dargestellte Kommunikationsnetz 6 verschieden Arten von Kommunikationsnetzen umfassen kann. Das Kommunikationsnetz 6 umfasst beispielsweise ein Mobilfunknetz, beispielsweise ein terrestrisches Mobilfunknetz, zum Beispiel ein GSM- oder UMTS-Netz, oder ein satellitenbasiertes Mobilfunknetz, und/oder ein oder mehrere Festnetze, beispielsweise das öffentliche geschaltete Telefonnetz, das weltweite Internet oder ein geeignetes LAN (Local Area Network) oder WAN (Wide Area Network), zur Verbindung von entsprechend ausgerüsteten Kommunikationsendgeräten 78, 8 oder einer Zertifikatsträgervorrichtung 7 mit der Registriereinheit R, der Zertifiziereinheit Z und der Schlüsselgenerierungseinheit 9. Zur gegenseitigen Verbindung der Registriereinheit R, der Zertifiziereinheit Z und der Schlüsselgenerierungseinheit 9 umfasst das Kommunikationsnetz 6 vorzugsweise mindestens ein Festnetz, beispielsweise ein geeignetes LAN oder WAN; der Fachmann wird verstehen, dass aber auch Mobilnetze dazu verwendet werden können.

Wie in den Figuren 2a bis 2c dargestellt wird, können die Registriereinheit R und/oder die Zertifiziereinheit Z und/oder die Schlüsselgenerierungseinheit 9 aber auch enger gekoppelt und zu einer gestrichelt angedeuteten kombinierten Einheit RZ zusammengefasst werden. Dabei können die Registriereinheit R und/oder die Zertifiziereinheit Z und/oder die Schlüsselgenerierungseinheit 9 auf einem gemeinsamen Computer oder auf mehreren miteinander verbundenen Computern ausgeführt werden, so dass die derart enger gekoppelten Einheiten über die Kommunikationsverbindung 5, beispielsweise ein Hochgeschwindigkeitsbus oder eine Computer-interne Softwareschnittstelle, kommunizieren können.

Die in den Figuren 2a bis 2c schematisch dargestellte Zertifikatsträgervorrichtung 7 ist beispielsweise ein Personal Computer, ein Mobilfunkgerät, insbesondere ein Mobilfunktelefon, oder eine Chipkarte, insbesondere eine SIM-Karte (Subscriber Identity Module) oder eine andere geeignete Vorrichtung mit Datenspeicher und Kommunikationsschnittstelle. Um sicher zu stellen, dass die Zertifikatsträgervorrichtung 7 nur von ihrem Besitzer, dem berechtigten Benutzer B der Zertifikatsträgervorrichtung 7, verwendet wird, ist in einem nicht lesbaren Speicherbereich der Zertifikatsträgervorrichtung 7 vorzugsweise eine Zertifikatsträger-PIN 71 (respektive ein Zertifikatsträger-Passwort) gespeichert, die mit einer vom Benutzer B eingegebenen Nummer (respektive Passwort) übereinstimmen muss, um mindestens gewisse Funktionen der Zertifikatsträgervorrichtung 7 zu aktivieren. Je nach Ausführung der Zertifikatsträgervorrichtung 7 wird diese Nummer vom Benutzer B über eine Benutzerschnittstelle der Zertifikatsträgervorrichtung 7 oder über eine Benutzerschnittstelle einer Vorrichtung 78, R, mit welcher die Zertifikatsträgervorrichtung 7 verbunden wird, eingegeben. Die Zertifikatsträgervorrichtung 7 umfasst zudem eine Zertifikatsträgeridentifizierung 72, beispielsweise eine eindeutige Gerätenummer oder eine eindeutige Benutzeridentifizierung, beispielsweise eine IMSI (International Mobile Subscriber Identification).

Um eine Bestellung für ein Zertifikat aufzugeben verwendet der Benutzer, je nach Ausführung der Zertifikatsträgervorrichtung 7, die Zertifikatsträgervorrichtung 7 selber, siehe Figur 2b, oder er verbindet die Zertifikatsträgervorrichtung 7 mit einer geeigneten Vorrichtung 78, beispielsweise ein Kommunikationsendgerät mit einer dafür geeigneten kontaktbehafteten oder kontaktlosen Geräteschnittstelle, siehe Figur 2a, oder er verwendet eine geeignete Vorrichtung 8 unabhängig von der Zertifikatsträgervorrichtung 7, beispielsweise ein Kommunikationsendgerät oder ein geeignetes Daten-Ein-/Ausgabeterminal, siehe Figur 2b oder 2c. Je nach Ausführungsvariante kann die Bestellung beispielsweise bei der Registriereinheit R auch durch Vertreter der Registriereinheit R direkt in ein geeignetes Daten-Ein-/Ausgabeterminal der Registriereinheit R eingegeben werden.

Um die Auslieferung eines bestellten Zertifikats von der Zertifiziereinheit Z anzufordern und durchzuführen verwendet der Benutzer B, je nach Ausführung der Zertifikatsträgervorrichtung 7, die Zertifikatsträgervorrichtung 7 selber, siehe Figur 2b, oder er verbindet die Zertifikatsträgervorrichtung 7 mit einer geeigneten Vorrichtung 78, beispielsweise ein Kommunikationsendgerät mit einer dafür geeigneten kontaktbehafteten oder kontaktlosen Geräteschnittstelle, siehe Figur 2a, oder er verwendet wenigstens für die Anforderung eine geeignete Vorrichtung 8 unabhängig von der Zertifikatsträgervorrichtung 7, beispielsweise ein Kommunikationsendgerät oder ein geeignetes Daten-Ein-/Ausgabeterminal, siehe Figur 2b oder 2c. Je nach Ausführungsvariante kann die Anforderung, beispielsweise bei der Registriereinheit R auch durch Vertreter der Registriereinheit R, direkt in ein geeignetes Daten-Ein-/Ausgabeterminal der Registriereinheit R eingegeben und durch das betreffende Softwaremodul, das die Anforderung entgegennimmt, an die Zertifiziereinheit Z weitergeleitet werden, wobei die Zertifikats-PlN aus Vertraulichkeitsgründen vorzugsweise vom Benutzer B eingegeben wird. Wie oben beschrieben generiert die Zertifiziereinheit Z für einen authentifizierten Benutzer B das bestellte Zertifikat durch Zertifizierung des öffentlichen Schlüssels und übermittelt das Zertifikat, oder eine Referenz auf das Zertifikat, vorzugsweise gesichert zur Speicherung auf die durch die Zertifikatsträgeridentifizierung identifizierte Zertifikatsträgervorrichtung 7 des Benutzers B. Die Übermittlung des Zertifikats an die Zertifikatsträgervorrichtung 7 erfolgt beispielsweise über das Kommunikationsnetz 6 via eine Vorrichtung 78, in welche die Zertifikatsträgervorrichtung 7 eingeführt ist, siehe Figur 2a, oder über das Kommunikationsnetz 6 direkt auf die Zertifikatsträgervorrichtung 7, siehe Figur 2b, oder über das Kommunikationsnetz 6 oder die Kommunikationsverbindung 5 via eine geeignete Schreibvorrichtung der Registriereinheit R, in welche die Zertifikatsträgervorrichtung 7 eingeführt ist, siehe Figur 2c. Vorzugsweise umfasst die Zertifikatsträgervorrichtung 7 ein Softwaremodul, welches vom Benutzer B mittels Bedienungselementen der Zertifikatsträgervorrichtung 7 aufgestartet werden kann und welches, beispielsweise nach erfolgreicher Eingabe der Zertifikatsträger-PIN 71, die Anforderung, Entgegennahme und Abspeicherung des bestellten Zertifikats oder einer Referenz des bestellten Zertifikats automatisch durchführt, beispielsweise unter Zuhilfenahme von Sicherheitsfunktionen, wobei vom Benutzer beispielsweise nur die Zertifikats-PIN 73 eingegeben werden muss.

Je nach der Art der verwendeten Vorrichtungen 7, 8, oder 78 für die Bestellungsaufgabe, respektive die Anforderung zur Auslieferung eines bestellten Zertifikats, und je nach der Art der verwendeten Kommunikationsnetze 6 können für die Kommunikation zwischen der verwendeten Vorrichtung 7, 8, 78 und der Registriereinheit R, respektive der Zertifiziereinheit Z oder der Schlüsselgenerierungseinheit 9, vom Fachmann unterschiedliche bekannte Mechanismen und Protokolle sowie Sicherheitsmittel, beispielsweise symmetrische oder asymmetrische Verschlüsselungsalgorithmen, verwendet und die Vorrichtungen 7, 8, und 78 sowie die Registriereinheit R, die Zertifiziereinheit Z und die Schlüsselgenerierungseinheit 9 mit entsprechenden Kommunikationsund Sicherheitsmodulen ausgestattet werden. Als Beispiele sollen hier die Verwendung von speziellen Kurzmeldungen, beispielsweise USSD-(Unstructured Supplementary Services Date) oder SMS-Meldungen (Short Message Services), oder speziellen Datendiensten, wie beispielsweise GPRS-Dienste (Generalized Packet Radio Service) zur Kommunikation über Mobilfunknetze oder die Kommunikation mittels WAP-basierten Browsern (Wireless Application Protocol), die über Mobilfunknetze auf Internet-Seiten zugreifen, oder die Kommunikation mittels herkömmlichen Browsern, die auf Internet-Seiten zugreifen sowie herkömmliche Client/Server Lösungen erwähnt werden.

Zur Übertragung eines bestellten Zertifikats an die durch eine Zertifikatsträgeridentifizierung bestimmte Zertifikatsträgervorrichtung 7, kann das entsprechende Soft- oder Hardwaremodul, das diese Funktion ausführt, je nach Art der Zertifikatsträgeridentifizierung, die Zertifikatsträgeridentifizierung, beispielsweise eine MSISDN-Nummer, direkt zur Adressierung der Zertifikatsträgervorrichtung 7 verwenden oder geeignete Adressinformationen zur Adressierung der durch die Zertifikatsträgeridentifizierung bestimmten Zertifikatsträgervorrichtung 7 durch Konsultieren von Datenbanken und/oder Directory-Diensten erhalten.

Das erfindungsgemässe Verfahren und das erfindungsgemässe System zur Ausführung dieses Verfahrens ermöglichen die Übertragung des Zertifikats an die Zertifikatsträgervorrichtung 7 des betreffenden Benutzers B sowohl örtlich als auch zeitlich von der eigentlichen Bestellung durch den betreffenden Benutzer B sowie von der Generierung des Schlüsselpaars des Benutzers sowie von der Zertifizierung zu trennen, ohne dass dabei die Sicherheit eingeschränkt wird, wodurch das Verfahren zum Bestellen, Generieren und Ausliefern von Zertifikaten flexibel an unterschiedliche Anforderungen und Bedingungen der zur Verfügung stehenden technischen Infrastruktur und bereits bestehenden Prozeduren und Prozesse angepasst werden kann. Die vorliegende Erfindung ermöglicht insbesondere auch die gesicherte Übertragung und Speicherung von Zertifikaten auf Zertifikatsträgervorrichtungen 7, die vorgängig an den betreffenden Benutzer B geliefert wurden und von diesem Benutzer B anonym verwendet werden, oder auf Zertifikatsträgervorrichtungen 7, die erst nach dem Abspeichern des Zertifikats dem betreffenden Benutzer B ausgehändigt werden.

Abschliessend soll festgehalten werden, dass durch die geheime Zertifikats-PIN jeweils die authentifizierte Identität eines Benutzers repräsentiert wird.

## Patentansprüche

1. Verfahren zum Bestellen eines digitalen Zertifikats durch einen Benutzer (B) und zum Ausliefern des Zertifikats an den Benutzer (B), in welchem Verfahren eine geheime Zertifikats-PIN generiert wird, in welchem Verfahren dem Benutzer (B) die geheime Zertifikats-PIN, die sonst nur einer Zertifiziereinheit (Z) bekannt ist, übermittelt wird, und in welchem Verfahren ein Zertifikat an den Benutzer (B) übertragen wird, wenn der Zertifiziereinheit (Z) die Zertifikats-PIN übermittelt wird, **dadurch gekennzeichnet,**
**dass** eine aufgegebene Bestellung gespeichert und die geheime Zertifikats-PIN der Bestellung zugeordnet wird,
**dass** die Zertifikats-PIN, Angaben, die es ermöglichen die Bestellung zu bestimmen, und eine Zertifikatsträgeridentifizierung (72) an die Zertifiziereinheit (Z) übermittelt werden, und
**dass** das Zertifikat oder eine Referenz auf das Zertifikat durch die Zertifiziereinheit (Z) an die durch die Zertifikatsträgeridentifizierung (72) bestimmte Zertifikatsträgervorrichtung (7) des Benutzers (B) übertragen wird.

2. Verfahren gemäss Anspruch 1, **dadurch gekennzeichnet, dass** beim Bestellen eines Zertifikats Personaldaten des Benutzers (B) an die Zertifiziereinheit (Z) übermittelt werden, und dass der Benutzer (B) durch eine Registriereinheit (R) authentifiziert wird und die Zuordnung der Personaldaten zum Benutzer (B) von der Registriereinheit (R) der Zertifziereinheit (Z) bestätigt wird.

3. Verfahren gemäss einem der Ansprüche 1 oder 2, **dadurch gekennzeichnet, dass** in der Zertifikatsträgervorrichtung (7) ein kryptographisches Schlüsselpaar, bestehend aus einem privaten und einem öffentlichen Schlüssel, generiert wird, dass der öffentliche Schlüssel an die Zertifiziereinheit (Z) übermittelt wird und dass die Zertifiziereinheit (Z) das Zertifikat durch Zertifizierung des öffentlichen Schlüssels generiert.

4. Verfahren gemäss einem der Ansprüche 1 oder 2, **dadurch gekennzeichnet, dass** durch eine Schlüsselgenerierungseinheit (9) ausserhalb der Zertifikatsträgervorrichtung (7) ein kryptographisches Schlüsselpaar, bestehend aus einem privaten und einem öffentlichen Schlüssel, generiert wird, dass der öffentliche Schlüssel der Zertifiziereinheit (Z) zugänglich gemacht wird, dass die Zertifiziereinheit (Z) das Zertifikat durch Zertifizierung des öffentlichen Schlüssels generiert und dass der private Schlüssel an die Zertifikatsträgervorrichtung (7) übertragen wird.

5. System umfassend: Mittel, um von einer Vielzahl von Benutzem (B) jeweils mindestens eine Bestellung für ein digitales Zertifikat entgegenzunehmen, Mittel, um jeweils für eine Bestellung eine geheime Zertifikats-PIN zu generieren, Mittel, um dem betreffenden Benutzer (B) die geheime Zertifikats-PIN, die sonst nur einer Zertifiziereinheit (Z) bekannt ist, zu übermitteln, und Mittel um ein Zertifikat zu übertragen, wenn der Zertifiziereinheit (Z) die Zertifikats-PIN übermittelt wird, **dadurch gekennzeichnet,**
**dass** das System zudem Mittel umfasst, um aufgegebene Bestellungen abzuspeichern und jeweils die dafür generierte geheime Zertifikats-PIN der Bestellung zuzuordnen,
**dass** das System zudem Mittel umfasst, um die Zertifikats-PIN, Angaben, die es ermöglichen die Bestellung zu bestimmen, und eine Zertifikatsträgeridentifizierung (72) entgegenzunehmen, und
**dass** das System zudem Mittel umfasst, um das Zertifikat oder die Referenz auf das Zertifikat von der Zertifiziereinheit (Z) an die durch die Zertifikatsträgeridentifizierung (72) bestimmte Zertifikatsträgervorrichtung (7) der Benutzer (B) zu übertragen.

6. System gemäss Anspruch 5, **dadurch gekennzeichnet, dass** es Mittel umfasst, um beim Bestellen eines Zertifikats vom betreffenden Benutzer (B) Personaldaten entgegenzunehmen und der Zertifiziereinheit (Z) zugänglich zu machen und dass das System eine Registriereinheit (R) umfasst, die den betreffenden Benutzer (B) authentifiziert und die Zuordnung der Personaldaten zum betreffenden Benutzer (B) der Zertifiziereinheit (Z) bestätigt.

7. System gemäss einem der Ansprüche 5 oder 6, **dadurch gekennzeichnet, dass** es Mittel umfasst, um von der Zertifikatsträgervorrichtung (7) eines betreffenden Benutzers (B) einen öffentlichen Schlüssel entgegenzunehmen und an die Zertifiziereinheit (9) zu übermitteln, wobei der öffentliche Schlüssel zusammen mit einem privaten Schlüssel ein kryptographisches Schlüsselpaar bildet, das in der Zertifikatsträgervorrichtung (7) generiert wurde und dass die Zertifiziereinheit (Z) Mittel umfasst, um das Zertifikat durch Zertifizierung des öffentlichen Schlüssels zu generieren.

8. System gemäss einem der Ansprüche 5 oder 6, **dadurch gekennzeichnet, dass** es eine Schlüsselgenerierungseinheit (9) umfasst, die ein kryptographisches Schlüsselpaar, bestehend aus einem privaten und einem öffentlichen Schlüssel, generiert und den öffentlichen Schlüssel der Zertifiziereinheit (Z) zugänglich macht, dass die Zertifiziereinheit (Z) Mittel umfasst, um das Zertifikat durch Zertifizierung des öffentlichen Schlüssels zu generieren und dass das System Mittel umfasst um den privaten Schlüssel an die Zertifikatsträgervorrichtung (7) zu übertragen.

## Claims

1. Method for ordering a digital certificate by a user (B) and for delivering the certificate to the user (B), in which method a secret certificate PIN is generated, in which method the secret certificate PIN, which is otherwise known only to a certification unit (Z), is transmitted to the user (B), and in which method a certificate is transmitted to the user (B) if the certificate PIN is transmitted to the certification unit (Z), **characterised in that**
a placed order is stored and the secret certificate PIN is assigned to the order,
the certificate PIN, data making it possible to determine the order, and a certificate support identification (72) are transmitted to the certification unit (Z), and
the certificate or a reference to the certificate is transmitted by the certification unit (Z) to the certificate support device (7), identified through the certificate support identification (72), of the user (B).

2. Method according to claim 1, **characterised in that**, when ordering a certificate, personal data of the user (B) are transmitted to the certification unit (Z), and the user (B) is authenticated through a registration unit (R), and the assignment of the personal data to the user (B) is confirmed to the certification unit (Z) by the registration unit (R).

3. Method according to one of the claims 1 or 2, **characterised in that** a pair of cryptographic keys, consisting of a private key and a public key, is generated in the certificate support device (7), the public key is transmitted to the certification unit (Z), and the certification unit (Z) generates the certificate through certification of the public key.

4. Method according to one of the claims 1 or 2, **characterised in that** a pair of cryptographic keys, consisting of a private key and a public key, is generated by a key generating unit (9) outside the certificate support device (7), the public key is made accessible to the certification unit (Z), the certification unit (Z) generates the certificate through certification of the public key, and the private key is transmitted to the certificate support device (7).

5. System comprising: means of receiving at least one order each for a digital certificate from a multiplicity of users (B), means of generating for each order a secret certificate PIN, means of transmitting to the respective user (B) the secret certificate PIN which is otherwise known only to a certification unit (Z), and means of transmitting a certificate if the certificate PIN is transmitted to the certification unit (Z), **characterised in that**
the system further comprises means to store placed orders and assign to each order the secret certificate PIN generated therefor,
the system further comprises means to receive the certificate PIN, indications making it possible to determine the order and a certificate support identification (72), and
the system further comprises means to transmit the certificate or the reference to the certificate from the certification unit (Z) to the certificate support device (7) of the user (B) identified through the certificate support identification (72).

6. System according to claim 5, **characterised in that** it comprises means of receiving personal data from the respective user (B) during ordering of a certificate and of making them accessible to the certification unit (Z), and the system comprises a registration unit (R) which authenticates the respective user (B) and confirms to the certification unit (Z) the assignment of the personal data to the respective user (B).

7. System according to one of the claims 5 or 6, **characterised in that** it comprises means of receiving from the certificate support device (7) of a respective user (B) a public key and of transmitting it to the certification unit (9) <sic. (Z)>, the public key forming together with a private key a cryptographic key pair which has been generated in the certificate support device (7), and the certification unit (Z) comprises means of generating the certificate through certification of the public key.

8. System according to one of the claims 5 or 6, **characterised in that** it comprises a key generating unit (9), which generates a pair of cryptographic keys, consisting of a private key and a public key, and makes the public key accessible to the certification unit (Z), the certification unit (Z) comprises means of generating the certificate through certification of the public key, and the system comprises means of transmitting the private key to the certificate support device (7).

## Revendications

1. Procédé pour la commande d'un certificat numérique par un utilisateur (B) et pour la remise du certificat à l'utilisateur (B), procédé dans lequel un code PIN secret de certificat est généré, procédé dans lequel le PIN secret de certificat est transmis à l'utilisateur (B), code PIN qui n'est connu autrement que d'une seule unité de certification (Z) et procédé dans lequel un certificat est transmis à l'utilisateur (B) quand le code PIN de certificat est transmis à l'unité de certification (Z), **caractérisé**
**en ce qu'**une commande remise est stockée et que le code PIN secret de certificat est associé à la commande,
**en ce que** le code PIN de certificat, des données qui permettent de définir la commande et une identification de porteur de certificat (72) sont transmis à l'unité de certification (Z), et
**en ce que** le certificat ou une référence sur le certificat est transmis par l'unité de certificat (Z) au dispositif de porteur de certificat (7) de l'utilisateur (B), défini par l'identification du porteur de certificat (72).

2. Procédé selon la revendication 1, **caractérisé en ce qu'**à la commande d'un certificat des données personnelles de l'utilisateur (B) sont transmises à l'unité de certification (Z) et **en ce que** l'utilisateur (B) est authentifié par une unité d'enregistrement (R) et l'attribution des données personnelle à l'utilisateur (B) est confirmée par l'unité d'enregistrement (R) de l'unité de certification (Z).

3. Procédé selon l'une des revendications 1 ou 2, **caractérisé en ce que** dans le dispositif porteur de certificat (7), une paire de codes cryptographiques, se composant d'un code privé et d'un code publique, est générée, **en ce que** le code publique est transmis à l'unité de certification (Z) et **en ce que** l'unité de certification (Z) génère le certificat par certification du code public.

4. Procédé selon l'une des revendications 1 ou 2, **caractérisé en ce que** par l'intermédiaire d'une unité de génération de code (9) à l'extérieur du dispositif porteur de certificat (7), une paire de code cryptographiques se composant d'un code privé et d'un code publique, est générée, **en ce que** le code publique est accessible pour l'unité de certification (Z), **en ce que** l'unité de certification (Z) génère le certificat par certification du code public et **en ce que** le code privé est transmis au dispositif porteur de certificat (7).

5. Système comprenant des moyens pour réceptionner respectivement au moins une commande pour un certificat numérique d'un grand nombre d'utilisateurs (B), des moyens pour générer respectivement un code PIN de certificat pour une commande, des moyens pour transmettre à l'utilisateur concerné (B) le code secret PIN de certificat qui n'est connu autrement que d'une unité de certification (Z) et des moyens pour transmettre un certificat quand l'unité de certification (Z) a transmis le code PIN de certificat, **caractérisé**
**en ce que** le système comprend en outre des moyens pour stocker des commandes remises et pour associer à la commande respectivement le code PIN de certificat secret généré à cet effet,
**en ce que** le système comprend en outre des moyens pour réceptionner le code PIN de certificat, des données qui permettent de définir la commande et une identification de porteur de certificat (72) et en ce que
le système comprend en outre des moyens pour transmettre le certificat ou la référence au certificat de l'unité de certification (Z) au dispositif porteur de certificat (7) de l'utilisateur (B), défini par l'identification de porteur de certificat (72).

6. Système selon la revendication 5, **caractérisé en ce qu'**il comporte des moyens pour réceptionner lors de la commande d'un certificat des données personnelles de l'utilisateur concerné (B) et de les rendre accessibles à l'unité de certification (Z) et **en ce que** le système comprend une unité d'enregistrement (R), qui authentifie l'utilisateur concerné (B) et qui valide l'attribution des données personnelles à l'utilisateur concerné (B) de l'unité de certification (Z).

7. Système selon l'une des revendications 5 ou 6, **caractérisé en ce qu'**il comprend des moyens pour réceptionner un code public fourni par le dispositif porteur de certificat (7) d'un utilisateur concerné (B), et de le transmettre à l'unité de certification (9), le code public formant ensemble avec un code privé une paire de codes cryptographiques générés dans le dispositif porteur de certificat (7) et **en ce que** l'unité de certification (Z) comprend des moyens pour générer le certificat par certification du code public.

8. Système selon l'une des revendications 5 ou 6, **caractérisé en ce qu'**il comprend une unité de génération de code (9), qui génère une paire de codes cryptographiques se composant d'un code privé et d'un code public, et rend le code public accessible à l'unité de certification (Z), **en ce que** l'unité de certification (Z) comprend des moyens pour générer le certificat par certification du code public et **en ce que** le système comprend des moyens pour transmettre le code privé au dispositif de porteur de certificat (7).
